# EUROPÄISCHE PATENTSCHRIFT

(11) **EP 1 205 267 B1**
(45) Veröffentlichungstag und Bekanntmachung des Hinweises auf die Patenterteilung: **12.07.2006**
(21) Anmeldenummer: 00811054.6
(22) Anmeldetag: 09.11.2000
(51) Int. Cl.: B09C 1/00

(54) **Verfahren zur Verwertung von Altbeton**
Method for recycling concrete rubble
Procédé pour valoriser des gravats de béton

(43) Veröffentlichungstag der Anmeldung: 15.05.2002
(73) Patentinhaber: ABB Immobilien AG, 5401 Baden (CH)
(72) Erfinder: Baracchi, Claudio, 5408 Ennetbaden (CH); Marti, Thomas, 8004 Zürich (CH)
(74) Vertreter: ABB Patent Attorneys

(56) Entgegenhaltungen:
- EP-A- 0 548 491
- DE-A- 4 326 200
- NL-A- 9 100 309
- RICHTER R ET AL: "SANIERUNG PAK-KONTAMINIERTER BOEDEN UND BAUSCHUTTMATERIALIEN IN PHYSIKALISCH-CHEMISCHEN BODENREINIGUNGSANLAGEN. DECONTAMINATION OF SOILS AND BUILDING RUBBLE CONTAMINATED WITH PAHS IN PHYSICO- CHEMICAL SOIL WASHING PLANTS" AUFBEREITUNGS TECHNIK,DE,VERLAG FUER AUFBEREITUNG SCHIRMER UND ZEH. WIESBADEN, Bd. 38, Nr. 4, 1. April 1997 (1997-04-01), Seiten 185-188,190-193, XP000687603 ISSN: 1443-9302

## Beschreibung

### Technisches Gebiet

Die Erfindung betrifft ein Verfahren zur Verwertung von Altbeton gemäss dem Oberbegriff des Patentanspruches 1.

### Stand der Technik

Beim Abriss von Bauten, insbesondere alten Fabrikgebäuden, fällt eine Unmenge von Altbeton an. Es ist deshalb wünschenswert, einen möglichst grossen Prozentsatz dieses Altbetons in neuen Bauten wiederzuverwenden oder ihn zumindest möglichst kostengünstig entsorgen zu können.

Da jedoch der Altbeton je nach vorherigem Einsatzbereich eine mehr oder weniger hohe Schadstoffbelastung aufweist, kann er nicht in jedem Fall wiederverwertet werden, sondern muss oftmals fachgerecht entsorgt werden. Die Art der Entsorgung und somit die damit verbundenen Kosten hängen von der Schadstoffbelastung des Altbetons ab.

Üblicherweise wird die Schadstoffbelastung der Bausubstanz alter Gebäude vor dem Abbruch im Rahmen von Altlasten-Untersuchungen abgeklärt. Dabei wird in drei Schritten vorgegangen.
In einem ersten Schritt werden die Schadstoffbelastungen in der Bausubstanz und im Untergrund abgeklärt, mit dem Ziel, einen Verdacht entweder zu bestätigen oder zu widerlegen. Massgebend dabei sind Zonen mit vermuteten höchsten Verschmutzungen.
In einem zweiten Schritt werden Sondierbohrungen durchgeführt oder Spitzproben genommen. Auch hier werden die Proben an Stellen entnommen, an welchen eine maximale Kontamination vermutet wird. Die Messungen gemäss diesen zwei Schritten sind deshalb nicht für die gesamte Bausubstanz repräsentativ. Eine Extrapolation der gemessenen Werte führt zu einer zu hohen Schadstoffbelastung.
Für eine zuverlässige Erfassung der vorhandenen Schadstoffkonzentrationen muss deshalb in einem dritten Schritt eine repräsentative Beprobung erfolgen. Dies ist nur mit einer grossen Anzahl statistisch verteilter Sondierbohrungen möglich, was teuer und zeitaufwendig ist. Die Kosten für diese Untersuchungen können dabei, insbesondere bei schwachen Schadstoffbelastungen, die Kosten für eine anschliessende Entsorgung des Altbetons deutlich überschreiten. Deshalb wird oft auf diesen dritten Schritt verzichtet und somit relativ wenig Altbeton wiederverwertet beziehungsweise Altbeton einer teuren Entsorgungsart zugeführt, welche aufgrund der effektiven Schadstoffbelastung gar nicht notwendig wäre.

Eine dritte Beprobung lässt sich auch an bereits losgelösten Betonblöcken durchführen. Diese Methode ist jedoch stark fehlerbehaftet, da nur die Oberfläche des aufgespitzten Altbetons zur Probeentnahme zugänglich ist. Zudem werden bei der Probeentnahme unbewusst vor allem dort Bruchstücke abgeschlagen, wo es am leichtesten geht, das heisst an hervorstehenden Kanten. Diese sind jedoch generell stärker belastet als das kompakte Innere oder eine Unterseite eines Altbetonsblockes

Aus der NL 9100309 ist weiterhin ein Verfahren zum Waschen und Klassifizieren von Bauschutt bekannt, wobei der Bauschutt in Fraktionen gebrochen wird und die Grobkornfraktion und die Feinkornfraktion voneinander getrennt werden.

In der EP 0548 491 A1 ist ferner ein Verfahren zur Wiedergewinnung des Mineralstoffanteils von Bauschutt angegeben, bei dem der Bauschutt zunächst ebenfalls in Fraktionen gebrochen wird und danach die Grobkornfraktion und die Feinkornfraktion voneinander getrennt werden.

Aus der DE 43 26 200 A1 ist darüber hinaus ein Verfahren zum kontinuierlichen Waschen von körnigen Substraten, wie beispielsweise Abbruchmaterial, bekannt, bei welchem Verfahren auch eine Trennung einer Grobkornfraktion von der Feinkornfraktion des Substrates mittels eines Schwertwäschers erfolgt.

### Darstellung der Erfindung

Es ist deshalb Aufgabe der Erfindung, ein Verfahren zur Verwertung von Altbeton zu schaffen, welches anhand einer kostengünstigen und repräsentativen Beprobung einer Schadstoffbelastung eine optimierte Wiederverwertung oder Entsorgung des Altbetons erlaubt.

Diese Aufgabe löst ein Verfahren zur Verwertung von Altbeton und ein System zur Durchführung des Verfahrens mit den Merkmalen des Patentspruches 1.

Erfindungsgemäss wird Altbeton gebrochen und in Fraktionen unterschiedlicher Korngrösse unterteilt. Mindestens an einer der Fraktionen wird eine Beprobung durchgeführt und diese einer gemessenen Schadstoffbelastung angepassten Wiederverwertung oder Entsorgung zugeführt.

Es hat sich gezeigt, dass Fraktionen mit einer grösseren Korngrösse eine kleinere Schadstoffbelastung aufweisen als diejenigen mit kleineren Korngrössen. Dadurch ist es möglich, den Altbeton gezielt in Untermengen mit unterschiedlichen Schadstoffbelastungen zu unterteilen, welche sich anschliessend entsprechend ihrer Belastung unterschiedlich verwerten, das heisst rezyklieren oder möglichst kostengünstig entsorgen lassen.

Durch Wahl eines geeigneten maximalen Brechdurchmessers bei der Brechung des Altbetons lässt sich erreichen, dass sich die Schadstoffbelastung in einer Grobfraktion gegenüber der Schadstoffbelastung der gesamten Bausubstanz vermindert und in einer Feinfraktion erhöht. Dadurch lässt sich erreichen, dass die Grobfraktion wiederverwertbar ist und/oder dass die Menge an hochbelastetem und deshalb kostenintensiv zu entsorgendem Material minimiert ist.

Durch das Brechen des Altbetons und der erst anschliessend an den Fraktionen erfolgten Beprobung ist es somit möglich, eine kostengünstige aber repräsentative Beprobung durchzuführen, welche zudem die Menge an hochkontaminiertem Material und somit die Kosten für dessen Entsorgung reduziert.

Weitere vorteilhafte Varianten des Verfahrens gehen aus den abhängigen Patentansprüchen hervor.

### Kurze Beschreibung der Zeichnungen

Im folgenden wird der Erfindungsgegenstand anhand eines bevorzugten Ausführungsbeispiels, welches in der beiliegenden Zeichnung dargestellt ist, näher erläutert. Die einzige Figur zeigt eine schematische Darstellung der Brechung von Altbeton zwecks erfindungsgemässer Verwertung.

### Wege zur Ausführung der Erfindung

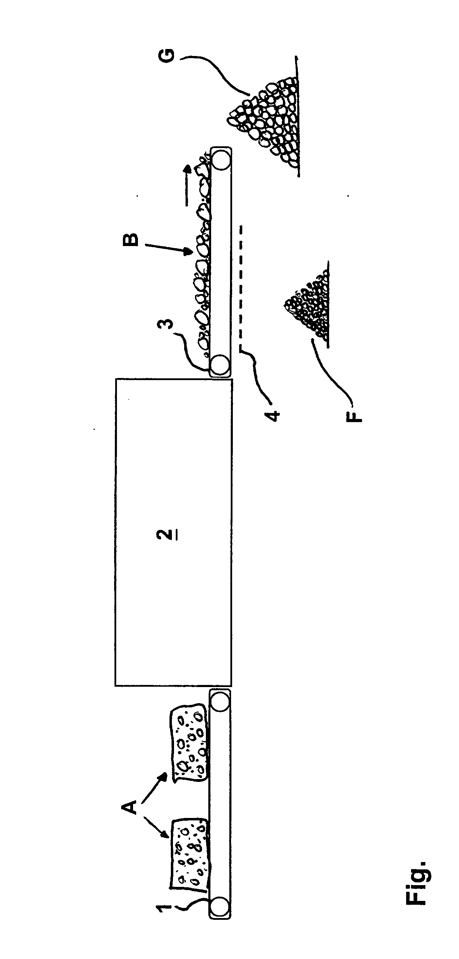

In Figur 1 ist schematisch eine Anlage zur Brechung von Altbeton A in mindestens zwei Fraktionen dargestellt. Im hier dargestellten Beispiel wird in zwei Fraktionen gebrochen, eine Grobkornfraktion G und eine Feinkornfraktion F. Vorzugsweise steht die Anlage auf einer Baustelle, auf welcher der zu verwertende Altbeton vor Ort anfällt. Dadurch lassen sich unnötige Transporte vermeiden, da ein für eine Wiederverwertung geeignet erklärter Altbeton an Ort und Stelle wieder eingesetzt und zu entsorgender Altbeton ohne Umwege an eine dafür am besten geeignete Stelle transportiert werden kann. Es ist jedoch auch möglich, dass die Anlage auf einem eigenen Areal aufgestellt ist.

In der hier dargestellten Anlage wird der Altbeton A auf einem ersten Förderband 1 zu einer Brechungsvorrichtung 2 gefördert. Als Brechungsvorrichtungen 2 eignen sich beispielsweise marktübliche Backen- oder Prallbrecher. In dieser Brechungsvorrichtung 2 wird der Altbeton A in mindestens zwei Fraktionen mit voneinander verschiedenen Korngrössen gebrochen. Gebrochener Altbeton G verlässt die Brechungsvorrichtung 2 auf einem zweiten Förderband 3 und wird mit Hilfe eines oder mehrerer mechanischen Trennmittel in die gewünschte Anzahl Fraktionen getrennt. Als Trennmittel eignet sich insbesondere ein Sieb 4, welches unterhalb des zweiten Förderbandes 3 oder bereits in der Brechungsvorrichtung 2 angeordnet ist. Wie in Figur 1 dargestellt ist, resultieren dadurch einzelne Deponien, wobei jede Deponie einen Teil des Altbetons in einer bestimmten Korngrösse aufweist. In Figur 1 ist eine erste Deponie für die Grobkornfraktion G und eine zweite Deponie für die Feinkornfraktion F dargestellt. In einer hier nicht dargestellten Variante des erfindungsgemässen Verfahrens wird die Grobkornfraktion G nochmals gebrochen, so dass eine zweite Grobkornfraktion und eine zweite Feinkornfraktion entsteht. In einer anderen hier nicht dargestellten Variante des Verfahrens wird die Grobkornfraktion G nach der Trennung von der Feinfraktion F nassmechanisch behandelt. Nassmechanische Behandlungen sind im Stand der Technik bekannt. Beispielsweise werden hierfür Schwertwäscher eingesetzt, in welchen das Material in mehreren Schritten behandelt wird. Dabei wird der Anteil an Zementstein in der Grobkornfraktion durch Abrasion weiter verringert, so dass nochmals eine Schadstoffabreicherung stattfindet. Die Schadstoffabreicherung wird zudem durch Auswaschung im wässrigen Milieu verstärkt.

Im erfindungsgemässen Verfahren wird nun an mindestens einer Deponie, vorzugsweise an allen Deponien eine Beprobung durchgeführt, um die Schadstoffbelastung zu bestimmen und ihren Bestimmungszweck festzulegen. Im Falle einer nassmechanischen Behandlung der Grobkornfraktion G wird die Beprobung vorzugsweise vorher durchgeführt, um festzustellen, ob eine anschliessende nassmechanische Behandlung überhaupt noch notwendig ist. Eine die vorgängige Beprobung ergänzende oder ersetzende Beprobung ist jedoch auch möglich.

Der Grund für den Unterschied in der Schadstoffbelastung dieser Deponien von einer Schadstoffbelastung einer ursprünglichen Bausubstanz liegt in der Entstehungsart der Schadstoffbelastungen. In rund 90% aller Fälle sind Kohlenwasserstoffe, das heisst Mineralölprodukte wie beispielsweise Motorenöl, Kühlschmiermittel und Diesel, wesentlich für die Schadstoffbelastung des Altbetons verantwortlich. Kontamination mit diesen Schadstoffen erfolgt fast immer durch Auslaufen, Verkleckern oder Einsickern. Beton, insbesondere das in den früheren Jahren und jetzt als Altbeton anfallende Material, setzt sich im wesentlichen aus circa 20-30% Zementstein inklusive Hohlräumen und 70-80% Zuschlagstoffen, im allgemeinem Kiessand und chemischen Zusätzen, zusammen. Der Zementstein selber weist eine relativ geringe Porosität von circa 3-4% auf. Auch die Zuschlagstoffe weisen eine relativ hohe Dichte auf. Mineralölprodukte lagern sich deshalb bevorzugt in Rissen und grossen Poren des Zementsteins ab.

Beim Brechen von Altbeton A gelangen nun die schwach belasteten kiesigen Zuschlagstoffe mehrheitlich in die Grobfraktion G, so dass in dieser Fraktion eine Schadstoffverminderung oder -abreicherung stattfindet. Der stärker belastete Zementstein gelangt hingegen mehrheitlich in die Feinkornfraktion F, so dass es hier zu einer Schadstoffanreichung kommt.

Wie stark diese Anreicherung beziehungsweise Abreicherung erfolgt, lässt sich durch Wahl eines maximalen Brechdurchmessers bei der Brechung des Altbetons A bestimmen. Unter einem maximalen Brechdurchmesser wird der maximale Durchmesser der Öffnung zwischen den Brechwerkzeugen, beispielsweise den Brechbacken eines Backenbrechers, verstanden. Dabei hängt die Wahl des maximalen Brechdurchmessers von verschiedenen Faktoren ab, insbesondere von der Zusammensetzung des Altbetons A und seinem Brechverhalten. Typische maximale Brechdurchmesser liegen zwischen 16 mm und 120 mm. Insbesondere ein minderwertiger oder ein bereits sich im Zersetzungszustand befindlicher Altbeton eignet sich gut für das erfindungsgemässe Verfahren und erlaubt deshalb einen relativ grossen maximalen Brechdurchmesser, da sich beim Brechen Kieskörner aus dem Zementstein einfach herauslösen lassen und somit die gewünschte Trennung von schadstoffreichem und schadstoffarmen Material ermöglichen.

Das erfindungsgemässe Verfahren ersetzt den eingangs erwähnten dritten Schritt zur repräsentativen Beprobung an der noch nicht abgerissenen Bausubstanz. In einer bevorzugten Variante des Verfahrens werden die eingangs erwähnten zwei ersten Schritte der Beprobung nach wie vor durchgeführt, damit erhaltene Messwerte bei der Festlegung der maximalen Brechdurchmesser berücksichtigt werden können.

Dank der erfindungsgemässen Fraktionierung von Altbeton ist es möglich, kostengünstige und stichhaltige repräsentative Beprobungen durchzuführen, welche es erlauben, die Kosten für eine Entsorgung von schadstoffbelastetem Material zu reduzieren und die Menge an wiederverwendbarem Material zu erhöhen.

### Bezugszeichenliste

- 1: Erstes Förderband
- 2: Brechungsvorrichtung
- 3: Zweites Förderband
- 4: Sieb
- A: Altbeton
- B: Gebrochener Altbeton
- G: Grobfraktion
- F: Feinfraktion

## Patentansprüche

1. Verfahren zur Verwertung von Altbeton mittels Brechen des Altbetons in Fraktionen, bei dem der Altbeton in mindestens eine Grobkornfraktion und eine Feinkornfraktion gebrochen wird und die Grobkornfraktion und die Feinkornfraktion voneinander getrennt werden, **dadurch gekennzeichnet,**
**dass** mindestens eine Schadstoffbelastung mindestens einer der Fraktionen gemessen und diese Fraktion einer entsprechend der gemessenen Schadstoffbelastung zulässigen Wiederverwertung oder Entsorgung zugeführt wird.

2. Verfahren nach Anspruch 1, **dadurch gekennzeichnet, dass** die Schadstoffbelastung der Grobkornfraktion gemessen wird und dass die Grobkornfraktion einer entsprechend der gemessenen Schadstoffbelastung zulässigen Wiederverwertung zugeführt wird.

3. Verfahren nach Anspruch 1, **dadurch gekennzeichnet, dass** die Schadstoffbelastung der Feinkornfraktion gemessen und dass die Feinkornfraktion einer entsprechend der gemessenen Schadstoffbelastung zulässigen Wiederverwertung oder Entsorgung zugeführt wird.

4. Verfahren nach Anspruch 1, **dadurch gekennzeichnet, dass** für die Brechung des Altbetons ein maximaler Brechdurchmesser gewählt wird, welcher im Vergleich zur Schadstoffbelastung des ungebrochenen Altbetons in der Grobkornfraktion zu einer Schadstoffabreicherung und in der Feinkornfraktion zu einer Schadstoffanreicherung führt.

5. Verfahren nach einem der Ansprüche 1 oder 4, **dadurch gekennzeichnet, dass** für die Brechung des Altbetons ein maximaler Brechdurchmesser gewählt wird, welcher die Zusammensetzung des Altbetons berücksichtigt.

6. Verfahren nach Anspruch 5, **dadurch gekennzeichnet, dass** das Brechverhalten des Altbetons berücksichtigt wird.

7. Verfahren nach einem der Ansprüche 1, 5 oder 6, **dadurch gekennzeichnet, dass** zur Brechung des Altbetons ein maximaler Brechdurchmesser zwischen 16 mm und 120 mm gewählt wird.

8. Verfahren nach Anspruch 1, dass die Grobkornfraktion in einer zweite Grobkornfraktion und eine zweite Feinkornfraktion gebrochen wird.

## Claims

1. Process for the recycling of waste concrete by breaking the waste concrete into fractions, wherein the waste concrete is broken into at least one coarse-grained fraction and one fine-grained fraction and the coarse-grained fraction and the fine-grained fraction are separated from one another,
**characterized in that** at least one pollutant burden of at least one of the fractions is measured and this fraction is fed into a permissible recycling or disposal system appropriate for the pollutant burden measured.

2. Process according to Claim 1, **characterized in that** the pollutant burden of the coarse-grained fraction is measured and that the coarse-grained fraction is fed into a permissible recycling or disposal system appropriate for the pollutant burden measured.

3. Process according to Claim 1, **characterized in that** the pollutant burden of the fine-grained fraction is measured and that the fine-grained fraction is fed into a permissible recycling or disposal system appropriate for the pollutant burden measured.

4. Process according to Claim 1, **characterized in that** for the breaking of the waste concrete a maximum breaking diameter is selected, which compared to the pollutant burden of the unbroken waste concrete leads to a pollutant depletion in the coarse-grained fraction and a pollutant enrichment in the fine-grained fraction.

5. Process according to one of Claims 1 or 4, **characterized in that** for the breaking of the waste concrete a maximum breaking diameter is selected which takes account of the composition of the waste concrete.

6. Process according to Claim 5, **characterized in that** the breaking behaviour of the waste concrete is taken into account.

7. Process according to one of Claims 1, 5 or 6, **characterized in that** for the breaking of the waste concrete a maximum breaking diameter between 16 mm and 120 mm is selected.

8. Process according to Claim 1, **characterized in that** the coarse-grained fraction is broken into a second coarse-grained fraction and a second fine-grained fraction.

## Revendications

1. Procédé en vue du recyclage de vieux béton par fracture du vieux béton en fragments, lors duquel le vieux béton est fracturé en au moins une fraction à blocs grossiers et en une fraction à blocs fins et lors duquel la fraction à blocs grossiers et la fraction à blocs fins sont séparées l'une de l'autre, **caractérisé en ce qu'**au moins une charge polluante d'au moins une des fractions est mesurée et **en ce que** cette fraction est acheminée d'une manière correspondant à la charge polluante mesurée au recyclage ou à la mise au rebut.

2. Procédé selon la revendication 1, **caractérisé en ce que** la charge polluante de la fraction à blocs grossiers est mesurée et **en ce que** la fraction à blocs grossiers est acheminée à un recyclage admissible correspondant à la charge polluante mesurée.

3. Procédé selon la revendication 1, **caractérisé en ce que** la charge polluante de la fraction à blocs fins est mesurée et **en ce que** la fraction à blocs fins est acheminée à un recyclage ou à une mise au rebut admissible correspondant à la charge polluante mesurée.

4. Procédé selon la revendication 1, **caractérisé en ce que**, pour la fracture du vieux béton, on choisit un diamètre de facture maximum, qui conduit, par comparaison à la charge polluante du vieux béton non fracturé, dans la fraction à blocs grossiers, à un appauvrissement en substances nocives et, dans la fraction à blocs fins, à un enrichissement en substances nocives.

5. Procédé selon la revendication 1 ou 4, **caractérisé en ce que**, pour la fracture du vieux béton, on choisit un diamètre de fracture maximum qui tient compte de la composition du vieux béton.

6. Procédé selon la revendication 5, **caractérisé en ce que** le comportement de fracture du vieux béton est pris en compte.

7. Procédé selon l'une quelconque des revendications 1, 5 ou 6, **caractérisé en ce qu'**en vue de la fracture du vieux béton on choisit un diamètre de fracture maximum compris entre 16 mm et 120 mm.

8. Procédé selon la revendication 1, **caractérisé en ce que** la fraction à blocs grossiers est fractionnée en une deuxième fraction à blocs grossiers et en une deuxième fraction à blocs fins.
